# EUROPEAN PATENT SPECIFICATION

(11) **EP 0 797 021 B1**
(45) Date of publication and mention of the grant of the patent: **03.01.2001**
(21) Application number: 97103008.5
(22) Date of filing: 21.02.1997
(51) Int. Cl.: F16F 9/04

(54) **Modified steel anchoring insert for plastic airspring pistons**
Modifiziertes Verankerungseinsatzventil für Gasfederkolben
Insertion modifiée d'ancrage pour pistons plastiques de ressort pneumatique

(30) Priority: 01.03.1996 US 609591
(43) Date of publication of application: 24.09.1997
(73) Proprietor: THE GOODYEAR TIRE & RUBBER COMPANY, Akron, Ohio 44316-0001 (US)
(72) Inventor: Adams, Anthony Dennis, Fairlawn, OH 44333 (US)
(74) Representative: Leitz, Paul

(56) References cited:
- EP-A- 0 123 171
- EP-A- 0 546 385
- EP-A- 0 647 795
- FR-A- 1 365 203
- FR-A- 2 523 679
- GB-A- 2 116 667

## Description

### Background of the Invention

### Field of Invention

This invention pertains to the art of methods and apparatuses for mounting airspring assemblies, and more specifically to methods and apparatuses for mounting airspring assemblies to reduce the stress load on the airspring piston and anchor.

### Description of the Related Art

Airsprings are used primarily to cushion heavy loads in trucks and other structures. As such, vehicles and airsprings are placed under heavy loads and stress. Airspring assemblies have been mounted to support structures using a single and multiple anchoring insert which has been inserted or molded in the plastic piston of the airspring. However, when an anchoring insert is used to anchor the airspring assembly to a the support structure, the load on the anchoring insert tries to pull the anchoring insert out of the plastic piston. This can result in damage to the anchoring insert and plastic piston, and may result in the airspring assembly becoming dislodged and inoperable.

EP-A-0 123 171 discloses an airspring assembly in which a piston is fixed to an arm by means of a clamp.

Applicant recognized the need to reduce or better disperse the load and stress directed to the insert so that the anchoring insert is not pulled from the plastic piston. Solving this problem makes it possible to increase the life of the airspring assembly and resist or prevent the failure of the airspring while in use.

The present invention contemplates a new and improved airspring assembly and method of assembling of airspring assemblies which are simple in design, effective in use, and which overcome the foregoing difficulties and others while providing better and more advantageous overall results.

### Summary of the Invention

In accordance with the present invention, a new and improved airspring assembly and method of mounting airspring assemblies is provided which reduces the stress level in the plastic components of airspring assemblies.

More particularly, in accordance with the present invention an airspring assembly includes a flexible member having a central axis, spaced first and second edges, a side wall, and an interior, the side wall having a toroidal region encompassing the second edge whereby the second edge is in the interior. The airspring assembly also includes a piston having a first end and a second end, the first end contacting the flexible member at the second edge, the piston being movable relative to the flexible member along the central axis. The airspring assembly further includes one or more anchoring insert molded into the piston and, usually but not always, aligned substantially along the central axis, a dispersing apparatus for dispersing load force and reducing stress in the anchoring insert, and a fastening apparatus for fastening the anchoring insert to an associated support structure having a first surface and a second surface.

According to one aspect of the invention, the dispersing apparatus includes a plate that encompasses a portion of the anchoring insert and lies adjacent to the associated support structure.

According to another aspect of the present invention, a method of mounting an airspring assembly to an associated support structure, includes the steps of inserting the anchoring insert in the piston, placing the plate between the piston and the associated support structure, and fastening the anchoring insert to the associated support structure with the fastening apparatus.

One advantage of the present invention is that it better disperses loads and therefore lowers the stresses generated by and seen by an airspring piston.

Another advantage of the present invention is that a planar, circular plate is connected to the anchoring insert and spreads the load over a large area, thereby lowering the stress.

Another advantage of the present invention is that the plate resists the anchoring insert from being pulled from the airspring piston.

Another advantage of the present invention is that the plate enables simple mounting and fastening methods such as a nut and bolt to be used to mount the airspring to a support structure.

Still other benefits and advantages of the invention will become apparent to those skilled in the art to which it pertains upon a reading and understanding of the following detailed specification.

### Brief Description of the Drawings

The invention may take physical form in certain parts and arrangement of parts, a preferred embodiment of which will be described in detail in this specification and illustrated in the accompanying drawings which form a part hereof and herein:
**Figure 1** is a cross-sectional view of a portion of an airspring assembly according to the invention; and,
**Figure 2** shows a perspective view of an anchoring insert and a plate according to the invention.

### Description of the Preferred Embodiment

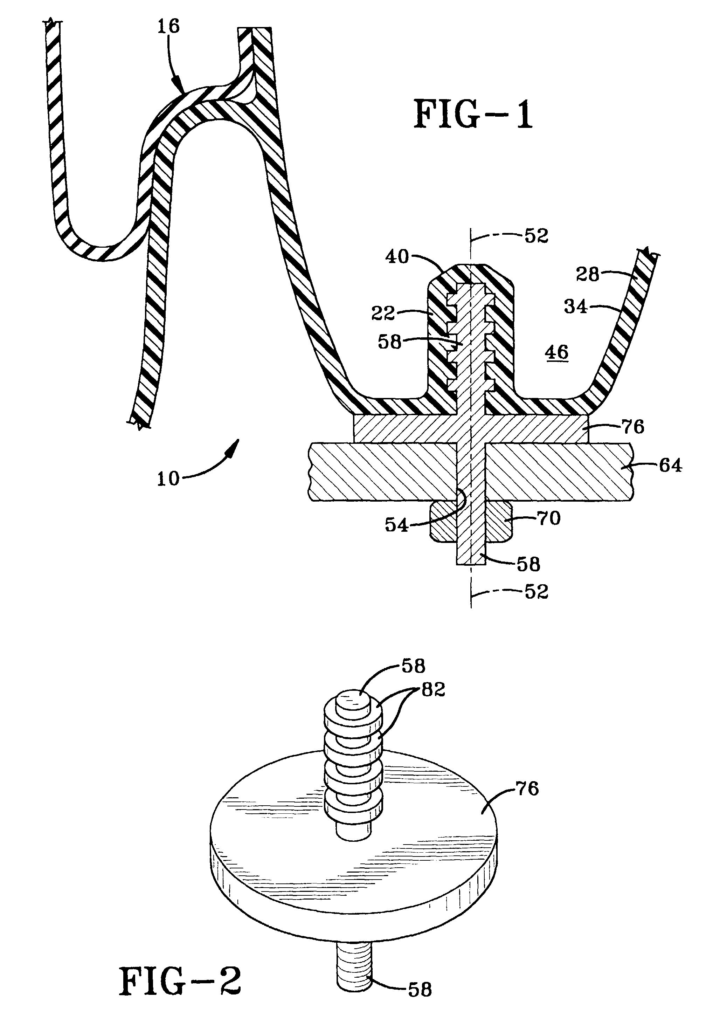

Referring now to the drawings wherein the showings are for purposes of illustrating a preferred embodiment of the invention only and not for purposes of limiting the same, Figure 1 shows a cross-sectional view of a portion of an airspring assembly 10. The airspring assembly 10 includes a flexible member 16 and a piston 22. The flexible member 16 is generally toroidal in shape and is substantially symmetric about a central axis or centerline 52.

The piston 22 is attached to the flexible member 16. The piston 22 is preferably made of plastic with a steel anchoring insert 58 molded into the piston 22. The anchoring insert 58 is then fastened to a support structure 64 so that the airspring assembly 10 is mounted in proper position. The anchoring insert 58 is preferably threaded through a hole 54 in the support structure 64 and fastened to the support structure 64 by a nut 70, however, any suitable fastening means such as rivets, welding, or glue may also be used.

A plate 76 is preferably fixedly attached to the anchoring insert 58 by welding, or is an integral part of the anchoring insert 58, to reduce the stresses acting upon the plastic piston 22. When a bolt and nut is used to anchor the airspring assembly 10 to a support structure 64 and the plate 76 is not used, such as in the prior art structures, the anchoring insert 58 bears high stress and can be pulled out of the plastic piston 22 under heavy loads. The plate 76, preferably circular in shape and preferably made of steel or other metals or hard plastics, is attached to the anchoring insert 58 and placed between the piston 22 and support structure 64. The plate 76 reduces the stress level placed on the anchoring insert 58 by dispersing the stress placed on the anchoring insert 58 by a load. The plate 76 distributes the load over a greater area and within the anchor, thus reducing the amount of stress at any one point. The plate 76 also resists the anchoring insert 58 from being pulled out of the piston 22 by acting as a barrier between the piston 22 and the load transferred through the support structure 64 and nut 70. The reduced stress on the piston 22 and anchoring insert 58 also increases the life of the parts individually and of the airspring assembly 10 as a whole. The anchoring insert 58 may be threaded through a hole in the plate 76, or the anchoring insert 58 may be welded, attached, or molded together with the plate 76.

Figure 2 shows a perspective view of the anchoring insert 58 and plate 76. In the preferred embodiment, the plate 76 is made of steel, but it could be made of other metals or hard plastics, as is the anchoring insert 58. The plate 76 is preferably 0,32 cm (0.125 inch) thick, though the plate 76 may range from 0,13 cm (0.05 inch) thick to 2,54 cm (1.00 inch) thick. The plate 76 preferably has a diameter of 3,81 cm (1.5 inches), though the plate 76 may have a diameter ranging from 0,64 cm to 30,5 cm (0.25 inches to 12.0 inches). The surface area of the plate 76 is preferably 11,35 cm² (1.76 square inches), though the surface area of the plate 76 may range from 0,32 cm² to 730 cm² (.05 square inch to 113.1 square inches). The plate 76 and anchoring insert 58 may be molded or formed together as one piece, or the plate 76 and anchoring insert 58 may be integral pieces fastened together in any suitable manner. The anchoring insert 58 preferably has extensions 82 to secure the anchoring insert 58 in the piston 22.

The preferred embodiments have been described, hereinabove. It will be apparent to those skilled in the art that the above methods may incorporate changes and modifications without departing from the general scope of this invention. It is intended to include all such modifications and alterations in so far as they come within the scope of the appended claims.

## Claims

1. An airspring assembly **(10)** comprising a flexible member **(16)**, said flexible member having a central axis **(52)**; a piston **(22)**, said piston having a first end and a second end, said first end contacting said flexible member, said piston being movable relative to said flexible member along said central axis; characterized by an anchoring insert **(58)**, said anchoring insert being attached to said piston and aligned substantially along said central axis; dispersing means for dispersing load force and reducing stress in said anchoring insert; and fastening means for fastening said anchoring insert to an associated support structure **(64)**, said associated support structure having a first surface and a second surface.

2. The airspring assembly **(10)** of claim 1 wherein said dispersing means comprises a plate **(76)**, said plate attached to said anchoring insert **(58)** and lying adjacent said associated support structure **(64)**.

3. The airspring assembly **(10)** of claim 1 or 2 wherein said fastening means comprises a nut **(70)**, said nut being securable around said anchoring insert **(58)**, said anchoring insert being disposed through a hole **(54)** in said associated support structure **(64)**, said nut being secured to said anchoring insert adjacent said second surface of said associated support structure.

4. The airspring assembly **(10)** of claim 2 or 3 wherein said plate **(76)** is located between said piston **(22)** and said associated support structure **(64)**.

5. The airspring assembly **(10)** of any of the preceding claims wherein said anchoring insert **(58)** is made of steel.

6. The airspring assembly **(10)** of any of claims 2-5 wherein said plate **(76)** is substantially circular in shape about said central axis **(52)**.

7. The airspring assembly **(10)** of any of claims 2-6 wherein said plate **(76)** and said anchoring insert **(58)** are integral.

8. A method of mounting an airspring assembly **(10)** to an associated support structure **(64)**, said airspring assembly comprising a flexible member **(16)**, a piston **(22)**, an anchoring insert **(58)**, a plate **(76)**, and fastening means for fastening said anchoring insert to said associated support structure, said method characterized by the steps of:
- inserting said anchoring insert in said piston;
- placing said plate between said piston and said associated support structure; and,
- fastening said anchoring insert to said associated support structure with said fastening means.

9. The method of claim 8 first comprising the step of molding said anchoring insert **(58)** and said plate **(76)** together as one piece.

10. The method of claim 8 first comprising the step of threading said anchoring insert **(58)** through a hole **(54)** in said plate **(76)**.

## Patentansprüche

1. Gasfederanordnung (10) mit einem flexiblen Element (16), wobei das flexible Element eine Mittelachse (52) aufweist, einem Kolben (22), wobei der Kolben ein erstes Ende und ein zweites Ende aufweist, wobei das erste Ende mit dem flexiblen Element in Kontakt steht und der Kolben relativ zu dem flexiblen Element entlang der Mittelachse bewegbar ist,
gekennzeichnet durch einen Verankerungseinsatz (58), wobei der Verankerungseinsatz an dem Kolben angebracht und im wesentlichen entlang der Mittelachse ausgerichtet ist,
ein Verteilungsmittel zum Verteilen einer Lastkraft und zum Reduzieren einer Beanspruchung in dem Verankerungseinsatz, und ein Befestigungsmittel zum Befestigen des Verankerungseinsatzes an einer zugehörigen Trägerkonstruktion (64), wobei die zugehörige Trägerkonstruktion eine erste Fläche und eine zweite Fläche aufweist.

2. Gasfederanordnung (10) nach Anspruch 1, wobei das Verteilungsmittel eine Platte (76) umfaßt, wobei die Platte an dem Verankerungseinsatz (58) angebracht ist und benachbart zu der zugehörigen Trägerkonstruktion (64) liegt.

3. Gasfederanordnung (10) nach Anspruch 1 oder 2, wobei das Befestigungsmittel eine Mutter (70) umfaßt, wobei die Mutter um den Verankerungseinsatz (58) herum befestigt sein kann, wobei der Verankerungseinsatz durch ein Loch (54) in der zugehörigen Trägerkonstruktion (64) hindurch angeordnet ist, wobei die Mutter an dem Verankerungseinsatz benachbart zu der zweiten Fläche der zugehörigen Trägerkonstruktion befestigt ist.

4. Gasfederanordnung (10) nach Anspruch 2 oder 3, wobei die Platte (76) zwischen dem Kolben (22) und der zugehörigen Trägerkonstruktion (64) angeordnet ist.

5. Gasfederanordnung (10) nach einem der vorhergehenden Ansprüche, wobei der Verankerungseinsatz (58) aus Stahl hergestellt ist.

6. Gasfederanordnung (10) nach einem der Ansprüche 2-5, wobei die Platte (76) um die Mittelachse (52) herum im wesentlichen kreisförmig ist.

7. Gasfederanordnung (10) nach einem der Ansprüche 2-6, wobei die Platte (76) und der Verankerungseinsatz (58) einstückig ausgebildet sind.

8. Verfahren zum Montieren einer Gasfederanordnung (10) an eine zugehörige Trägerkonstruktion (64), wobei die Gasfederanordnung ein flexibles Element (16), einen Kolben (22), einen Verankerungseinsatz (58), eine Platte (76) und ein Befestigungsmittel zum Befestigen des Verankerungseinsatzes an der zugehörigen Trägerkonstruktion umfaßt, wobei das Verfahren durch die Schritte gekennzeichnet ist, daß:
der Verankerungseinsatz in den Kolben eingesetzt wird,
die Platte zwischen dem Kolben und der zugehörigen Trägerkonstruktion plaziert wird, und
der Verankerungseinsatz an der zugehörigen Trägerkonstruktion mit dem Befestigungsmittel befestigt wird.

9. Verfahren nach Anspruch 8, das zuerst den Schritt umfaßt, daß der Verankerungseinsatz (58) und die Platte (76) zusammen als ein Stück geformt werden.

10. Verfahren nach Anspruch 8, das zuerst den Schritt umfaßt, daß der Verankerungseinsatz (58) durch ein Loch (54) in der Platte (76) hindurchgeführt wird.

## Revendications

1. Assemblage de ressort pneumatique (10) comprenant un élément flexible (16), ledit élément flexible possédant un axe central (52); un piston (22), ledit piston possédant une première extrémité et une seconde extrémité, ladite première extrémité entrant en contact avec ledit élément flexible, ledit piston étant mobile par rapport audit élément flexible le long dudit axe central; caractérisé par une pièce rapportée d'ancrage (58), ladite pièce rapportée d'ancrage étant fixée audit piston et étant disposée essentiellement en alignement le long dudit axe central; un moyen de dispersion pour disperser la force de charge et pour réduire les contraintes dans ladite pièce rapportée d'ancrage; et un moyen de fixation pour fixer ladite pièce rapportée d'ancrage à une structure de support associée (64), ladite structure de support associée possédant une première surface et une seconde surface.

2. Assemblage de ressort pneumatique (10) selon la revendication 1, dans lequel ledit moyen de dispersion comprend une plaque (76), ladite plaque étant fixée à ladite pièce rapportée d'ancrage (58) et étant disposée en position adjacente à ladite structure de support associée (64).

3. Assemblage de ressort pneumatique (10) selon la revendication 1 ou 2, dans lequel ledit moyen de fixation comprend un écrou (70), ledit écrou pouvant venir se fixer autour de ladite pièce rapportée d'ancrage (58), ladite pièce rapportée d'ancrage étant disposée à travers un trou (54) pratiqué dans ladite structure de support associée (64), ledit écrou étant fixé à ladite pièce rapportée d'ancrage en position adjacente à ladite seconde surface de ladite structure de support associée.

4. Assemblage de ressort pneumatique (10) selon la revendication 2 ou 3, dans lequel ladite plaque (76) est disposée entre ledit piston (22) et ladite structure de support associée (64).

5. Assemblage de ressort pneumatique (10) selon l'une quelconque des revendications précédentes, dans lequel ladite pièce rapportée d'ancrage (58) est réalisée en acier.

6. Assemblage de ressort pneumatique (10) selon l'une quelconque des revendications 2 à 5, dans lequel ladite plaque (76) est essentiellement de forme circulaire autour dudit axe central (52).

7. Assemblage de ressort pneumatique (10) selon l'une quelconque des revendications 2 à 6, dans lequel ladite plaque (76) et ladite pièce rapportée d'ancrage (58) sont solidaires.

8. Procédé de montage d'un assemblage de ressort pneumatique (10) sur une structure de support associée (64), ledit assemblage de ressort pneumatique comprenant un élément flexible (16), un piston (22), une pièce rapportée d'ancrage (58), une plaque (76) et un moyen de fixation pour fixer ladite pièce rapportée d'ancrage à ladite structure de support associée, ledit procédé étant caractérisé par les étapes consistant à:
- insérer ladite pièce rapportée d'ancrage dans ledit piston;
- placer ladite plaque entre ledit piston et ladite structure de support associée; et
- fixer ladite pièce rapportée d'ancrage à ladite structure de support associée avec ledit moyen de fixation.

9. Procédé selon la revendication 8, comprenant d'abord l'étape consistant à mouler ladite pièce rapportée d'ancrage (58) et ladite plaque (76) de manière conjointe en une seule pièce.

10. Procédé selon la revendication 8, comprenant d'abord l'étape consistant à visser ladite pièce rapportée d'ancrage (58) à travers un trou (54) pratiqué dans ladite plaque (76).
